# EUROPEAN PATENT SPECIFICATION

(11) **EP 2 181 845 B1**
(45) Date of publication and mention of the grant of the patent: **11.02.2015**
(21) Application number: 09013695.3
(22) Date of filing: 30.10.2009
(51) Int. Cl.: B32B 27/36, B32B 27/08, B44C 3/02, B32B 27/16, B29C 35/08, C08J 7/18, B32B 3/30, B29C 59/04, B44C 1/24, B32B 27/40, B32B 27/26, B32B 7/12, B32B 27/30

(54) **Decoration sheet and method of manufacturing the same**
Dekofolie und Verfahren zu deren Herstellung
Feuille décorative et son procédé de fabrication

(30) Priority: 30.10.2008 KR 20080107122
(43) Date of publication of application: 05.05.2010
(73) Proprietor: LG Hausys, Ltd., Youngdungpo-gu Seoul 150-721 (KR)
(72) Inventor: Han, Sang Hui, Ulsan 680-832 (KR); Kim, Dong Gon, Ulsan 680-832 (KR)
(74) Representative: Hoffmann Eitle

(56) References cited:
- GB-A- 2 115 742
- DATABASE WPI Week 199618 Thomson Scientific, London, GB; AN 1996-175264 XP002563378 -& JP 08 052849 A (DAINIPPON PRINTING CO LTD) 27 February 1996 (1996-02-27)
- DATABASE WPI Week 199633, Derwent Publications Ltd., London, GB; AN 1996-328837 -& JP H08 150 692 A (DAINIPPON PRINTING CO LTD) 11 June 1996

## Description

### BACKGROUND

### 1. Field of the Invention

The present invention relates to a decoration sheet and a method of manufacturing the same.

### 2. Discussion of Related Art

A conventional decoration sheet, on the surface of which an embossed pattern is formed, is manufactured by forming a printed pattern on the surface of a polypropylene film or polyvinyl film, which is formed through an extruding or calendering process, laminating a transparent film or applying a treatment agent, and then pressing with a roll in which a pattern is carved while applying heat.

Also, products with an embossed pattern formed on the back side are manufactured by further applying a resin to the above product through an extruding or calendering process.

However, it is difficult to form a fine and delicate embossed pattern on a product manufactured by the above method, since the embossed pattern formed using the roll is elongated or deformed in a subsequent process using heat.

Also, a sheet having a mirror surface, which is one kind of decoration sheet, has an embossed pattern formed on a surface thereof. Thus, in the sheet having a mirror surface, the embossed pattern may be damaged due to scratches, and is easily stained. In addition, the conventional mirror surface sheet cannot show a softly-glowing and luxurious 3-dimensional pattern.

JP 08 150 692 discloses a decoration sheet having a cubic sense and excellent deep design effect by providing an irregular pattern in an intermediate layer of the decorative sheet.

### SUMMARY OF THE INVENTION

The present invention is directed to a decoration sheet and a method of manufacturing the same.

One aspect of the present invention provides a decoration sheet, which includes: a transparent layer that has a mirror surface and includes glycol-modified polyethyleneterephthalate (PETG); a protective layer that is formed on the upper side of the transparent layer; an embossed pattern layer that is formed on the lower side of the transparent layer and includes a cured product of a photo-curable or thermo-curable resin composition; a colored film that is formed on the lower side of the embossed pattern layer; and a printed layer or metal deposition layer that is formed between the embossed pattern layer and the colored film and is adhered to the colored film using an opaque adhesive layer.

Another aspect of the present invention provides a method of manufacturing a decoration sheet, which includes: forming a protective layer on one surface of a transparent layer that has a mirror surface and includes a glycol modified polyethyleneterephthalate; applying a coating solution including a photo-curable or thermo-curable resin composition on the other surface of the glycol-modified polyethyleneterephthalate film; curing the applied coating solution while the coating layer is being pressed with a roll or mold having an embossed pattern; forming a printed layer or metal deposition layer on the embossed pattern layer; and adhereing a colored film to the printed layer or metal deposition layer using an opaque adhesive layer.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:

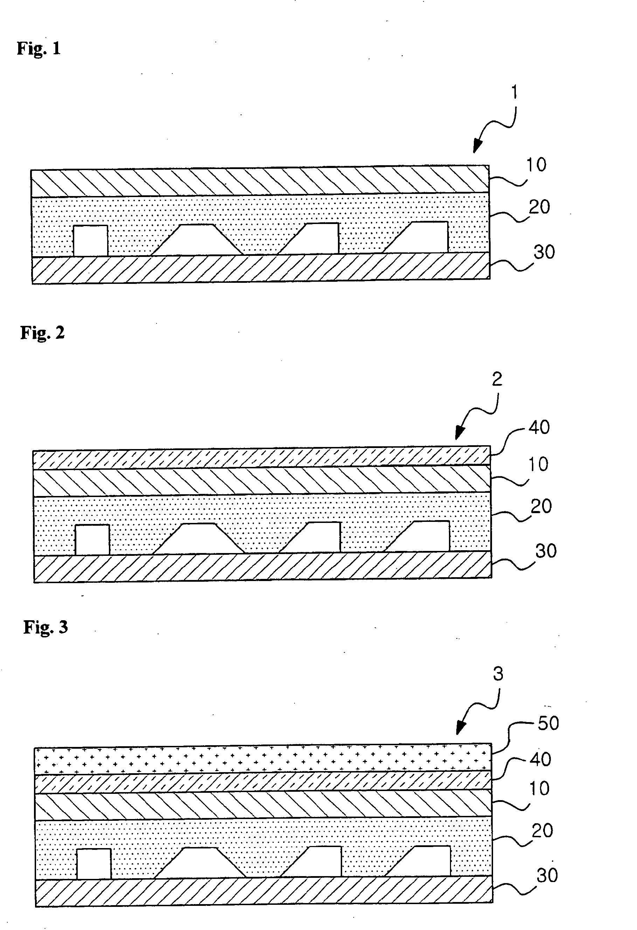

FIGS. 1 to 7 show schematics of illustrative embodiments of decoration sheets.

### DETAILED DESCRIPTION OF EXEMPLARY EMBODIMENTS

Hereinafter, exemplary embodiments of the present invention will be described in detail.

The present invention relates to a decoration sheet as defined above.

The decoration sheet is a mirror surface sheet for decoration, a surface of which has a mirror surface effect, and the inside of which has a 3-dimensional pattern.

The decoration or mirror surface sheet may be laminated on various materials such as wood, plastic, metal, building walls, or glass. In detail, the decoration or mirror surface sheet may be used on exterior materials of various electronic appliances or devices, surface finishing materials of furniture, or interior and exterior materials of buildings.

Hereinafter, the decoration sheet will be described in further detail.

The decoration sheet includes a transparent layer including PETG. The transparent layer has a mirror effect on the decoration sheet. The transparent layer may be a PETG film. The PETG film may be manufactured by extruding, pressing or calendering a resin composition including PETG and other conventional additives.

PETG may be a copolymer formed by copolymerizing a polyethylene terephthalate (PET) resin composition with a co-monomer, such as, 1,4-cyclohexanedimethanol (CHDM). PETG is free from a whitening phenomenon, is able to be used to produce products having excellent transparency without a limitation in thickness, and has bright colors and excellent gloss. PETG also has excellent printability, impact resistance and chemical resistance, can undergo a forming process under a variety of conditions, and has excellent secondary processability. PETG does not contain toxic materials such as endocrine disruptors, so it does not release any toxic materials during incineration or fire.

As the PETG film is used for the transparent layer, the transparent layer has excellent transparency and mirror surface effect. In addition, due to the excellent formability of the PETG film, the decoration sheet may be applied to an overlaying, wrapping or membrane-forming process, which is difficult to perform on conventional decoration sheets, and thus can be formed according to its desired use without limitations.

The transparent layer may have a thickness of about 0.02 mm to about 0.5 mm. By maintaining the thickness of the transparent layer in the above range, the decoration sheet retains excellent transparency, mirror surface effect and formability.

As shown in Fig. 1, the decoration sheet 1 includes an embossed pattern layer 20 formed on the lower side of the transparent layer 10. The term "embossed pattern layer" as used herein refers to a layer formed on a surface of the transparent layer, specifically a 3-dimensional uneven pattern that is formed on the lower side of the transparent layer. Specific shapes of the uneven pattern are not particularly limited, and thus can be appropriately selected according to a desired use without limitations.

The embossed pattern layer includes a cured product of a photo-curable or thermo-curable resin composition. As the embossed pattern layer is formed of the photo-curable or thermo-curable resin composition, a pattern layer which has excellent resistance to external factors such as heat, may be formed. Accordingly, the embossed pattern layer can have a deeply-formed three-dimensional pattern, and thus effectively maintain its shape because it is not deformed by heat applied during a subsequent process of manufacturing the decoration sheet or processing, or during use of the decoration sheet.

The kind of photo-curable or thermo-curable resin composition applied to the embossed pattern layer herein is not particularly limited, and the composition may be one of the resin compositions generally known in the art.

In one embodiment, the photo-curable resin composition may include a photo-curable oligomer, a photoinitiator, and a diluent monomer. Examples of the photo-curable oligomer may include epoxy acrylate, urethane acrylate, polyester acrylate, polyether acrylate, and acrylate compounds. Among these oligomers, one or a combination of at least two thereof may be used as necessary.

The kind of photoinitiator which may be included in the composition is not particularly limited, and thus may be one or a combination of at least two selected from the group consisting of benzoin compounds, benzoin ether compounds, acetophenone compounds, anthraquinone compounds, thioxanthone compounds, ketal compounds, peroxides and benzophenone compounds. In the photo-curable resin composition, the diluent monomer serves to control the viscosity of the resin composition, which may be, but is not particularly limited to, an acrylic monomer such as methyl (meth)acrylate, ethyl (meth)acrylate, 2-ethylhexyl (meth)acrylate, octyl (meth)acrylate, dodecyl (meth)acrylate, octadecyl (meth)acrylate, methylcylcohexyl (meth)acrylate, isobonyl (meth)acrylate, phenyl (meth)acrylate, benzyl (meth)acrylate, chlorophenyl (meth)acrylate, methoxyphenyl (meth)acrylate, or bromophenyl (meth)acrylate.

Specifically, in order to further increase the hardness of the embossed pattern layer, a multifunctional compound such as a multifunctional acrylate may be mixed in the photo-curable resin composition. Examples of the multifunctional acrylate to be used herein may include, but are not limited to: bifunctional acrylates such as 1,4-butanediol di(meth)acrylate, 1,6-hexanediol di(meth)acrylate, neopentylglycol di(meth)acrylate, polyethyleneglycol di(meth)acrylate, neopentylglycol adipate di(meth)acrylate, hydroxypivalic acid neopentylglycol di(meth)acrylate, dicyclopentanyl di(meth)acrylate, caprolactone-modified dicyclopentenyl di(meth)acrylate, ethyleneoxide-modified di(meth)acrylate, di(meth)acryloxy ethyl isocyanurate, allylated cyclohexyl di(meth)acrylate, tricyclodecane dimethanol(meth)acrylate, dimethylol dicyclopentane di(meth)acrylate, ethyleneoxide-modified hexahydrophthalic acid di(meth)acrylate, tricyclodecane dimethanol(meth)acrylate, neopentylglycol-modified trimethylpropane di(meth)acrylate, adamantane di(meth)acrylate, and 9,9-bis[4-(2-acryloyloxyethoxy)phenyl]fluorine; trifunctional acrylates such as trimethylolpropane tri(meth)acrylate, dipentaerythritol tri(meth)acrylate, propionic acid-modified dipentaerythritol tri(meth)acrylate, pentaerythritol tri(meth)acrylate, propyleneoxide-modified trimethylolpropane tri(meth)acrylate, trifunctional urethane (meth)acrylate, and tris(meth)acryloxyethylisocyanurate; tetrafunctional acrylates such as diglycerin tetra(meth)acrylate and pentaerythritol tetra(meth)acrylate; pentafunctional acrylates such as propionic acid-modified dipentaerythritol penta(meth)acrylate; and hexafunctional acrylates such as dipentaerythritol hexa(meth)acrylate, caprolactone-modified dipentaerythritol hexa(meth)acrylate, and urethane (meth)acrylate (e.g. a reaction product of an isocyanate monomer and trimethylolpropane tri(meth)acrylate). In other words, according to the hardness, dimension stability, elongation, and flexibility of the embossed pattern layer, one may be selected from the bifunctional to hexafunctional acrylates.

In consideration of adhesion strength to the above-described transparent layer or releasing properties from a metal mold, and the like, used to form the embossed pattern, various functional additives such as a silicon compound, a fluorine compound, or fatty acid compounds may be added to the resin composition.

A person skilled in the art may prepare an appropriate photo-curable resin composition, by using the above-described components and/or other functional additives, and considering the releasing properties from the metal mold, the adhesion strength to the transparent layer, the hardness, flexibility, elongation, and dimension stability of the embossed pattern layer, and the like.

In one embodiment, in order to improve pattern-forming efficiency, the photo-curable resin composition may be formulated so as to be a solventless type. Specifically, the photo-curable resin composition may be formulated to have a solid content of 100 weight%, but the present invention is not limited thereto.

The kind of thermo-curable resin compound which can be used herein is not particularly limited, and thus the thermo-curable resin compound may be prepared using various thermo-curable resins generally known in the art, such as acrylic resins, acryl-urethane resins, epoxy resins, urethane resins, isocyanate resins, polyesters, ethylene-acetic acid vinyl copolymers, polyamides, melamine resins, synthetic rubbers, and polyvinylalcohols.

The thermo-curable resin composition may further comprise other conventional additives such as a crosslinking agent along with the above thermo-curable resin, and be additionally mixed with a functional additive for improving the releasing properties from the metal mold, the adhesion strength to the transparent layer, the hardness, flexibility, elongation and dimension stability of the embossed pattern layer, as described in the photo-curable resin composition.

A method of forming the embossed pattern layer using the photo-curable or thermo-curable resin composition is not particularly limited. For example, the embossed pattern layer may be formed by a method including applying a coating solution comprising the resin composition on one surface of the transparent layer so as to form a coating layer, and, while pressing a roll or mold having a pattern corresponding to a desired pattern to be formed on the coating layer, curing the coating layer. Here, curing conditions for individual resin compositions are not particularly limited. For example, depending on the recipe used, the resin composition may be cured by suitably applying heat or light. In this case, "light application" refers to application of electromagnetic waves, which affect individual components included in a photo-curable resin composition, thereby inducing a polymerization reaction. The electromagnetic waves may include not only microwaves, infrared (IR) rays, ultraviolet (UV) rays, X-rays or y rays, but also particle beams, such as α-particle beams, proton beams, neutron beams, and electron beams.

The embossed pattern layer may have a thickness of about 2 µm to 50 µm. The thickness of the embossed pattern layer may be an average or maximum thickness of the uneven pattern formed in the pattern layer. When the thickness of the pattern layer is less than 2 µm, the three-dimensional effect may be degraded, and when the thickness of the pattern layer is more than 50 µm, the formability may be degraded.

As shown in Fig. 1, the decoration sheet includes a colored film 30 formed on the lower side of the embossed pattern layer 20. The colored film 30 may function to improve the appearance and mirror surface effects of the decoration sheet 1.

The colored film 30 is used to improve an aesthetic aspect or the mirror surface effect of the decoration sheet 1, and the kind of colored film 30 is not particularly limited. For example, the colored film 30 may be a polyvinyl chloride film or polyester film manufactured by adding various organic or inorganic pigments or dyes, or pearl (e.g., mica pearl) to provide colors. Such a film may be manufactured by extruding, pressing or calendering resin compositions in which polyvinyl chloride or polyester is mixed with various additives. For example, when a polyvinyl chloride film is used for the colored film, the polymerization degree of polyvinyl chloride may be about 700 to 1300, and a plasticizer or stabilizer may be used as an additive. Here, the plasticizer may be included in an amount of 25 parts by weight or less, relative to 100 parts by weight of the polyvinyl chloride, and the stabilizer may be included in an amount of 2 to 4 parts by weight, relative to 100 parts by weight of the polyvinyl chloride, but the present invention is not limited thereto.

The thickness of the colored film 30 is not particularly limited, and may be controlled according to a desired effect. In one embodiment, the colored film may have a thickness of about 0.05 mm to 0.5 mm.

As shown in Fig. 2, the decoration sheet further includes a protective layer 40 formed on the upper side of the transparent layer 10. The protective layer 40 may function to improve surface properties of the sheet such as wear resistance and scratch resistance. The protective layer 40 may be formed using UV curable paint (e.g., urethane acrylate UV curable paint, and the like) and so on, or using a common material such as acryl resins, acryl-urethane resins, epoxy resins, polyurethanes, polyisocyanates, polyesters, acrylate compounds, ethylene-acetic acid vinyl copolymers, polyamides, melamine resins, synthetic rubbers or polyvinylalcohols.

The decoration sheet may also include a surface layer 50 formed on the upper side of the transparent layer 10, and as shown in Fig. 3, the surface layer 50 may be formed on the upper side of the protective layer 40, which is described above. The surface layer 50 may be used to protect the surface of the decoration sheet, and may be, but is not limited to, a resin film such as a polyethylene film.

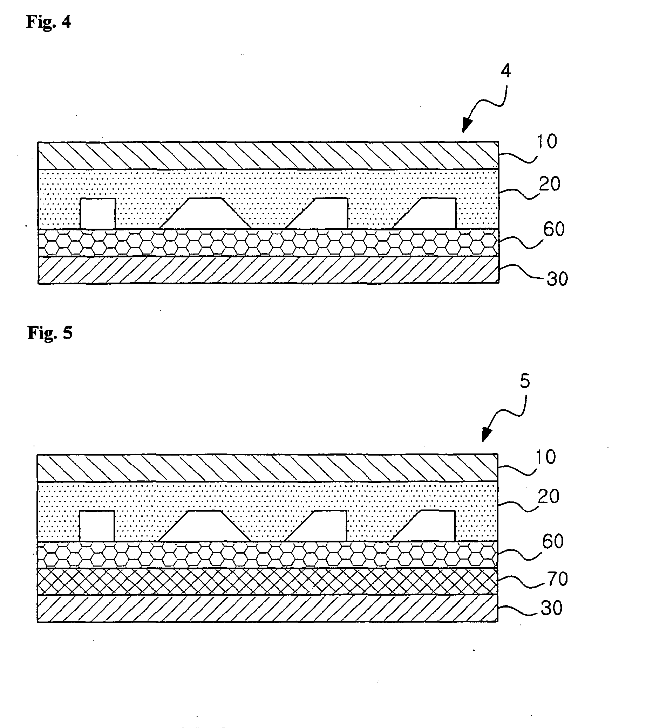

As shown in Fig. 4, the decoration sheet also include a printed layer or metal deposition layer 60, which is formed between the embossed pattern layer 20 and the colored film 30. As shown in Fig. 5, the colored film 30 is adhered to the printed layer or metal deposition layer 60 using an opaque adhesive layer 70. The printed layer or metal deposition layer 60 may be directly formed on the embossed pattern layer 20, or formed on a film such as a polyvinyl chloride or polyester film (e.g., PET or PETG) and then laminated on the embossed pattern layer 20. The method of forming the printed layer 60 is not particularly limited, and thus the printed layer 60 may be formed by digital printing, gravia printing, screen printing, offset printing, rotary printing, or flexo printing. From a point of view of being capable of realizing various colors and patterns, the gravia printing may be used, but the present invention is not limited thereto. The method of forming the metal deposition layer 60 is not particularly limited, and thus the metal deposition layer 60 may be formed from a metal such as aluminum, stainless steel, copper, gold, silver, nickel, chromium or cobalt, or a metal oxide or alloy through a vacuum thermal deposition or sputtering process. Conditions for the process are not particularly limited. In addition, the thickness and optical transmittance of the metal deposition layer is not particularly limited, and thus is selected so as to be suitable for a desired effect.

The colored film 30, as shown in Fig. 5, is adhered using the adhesive layer 70. Here, the adhesive layer 70 which can be used herein may be, but is not particularly limited to, a polyurethane adhesive or polyester adhesive, which is generally known in the art. The adhesive layer 70 is formed as an opaque adhesive layer by adding a pigment to further enhance the three-dimensional effect of the decoration sheet. The thickness of the adhesive layer is not particularly limited, and may be controlled in the range of 1 µm to 5 µm.

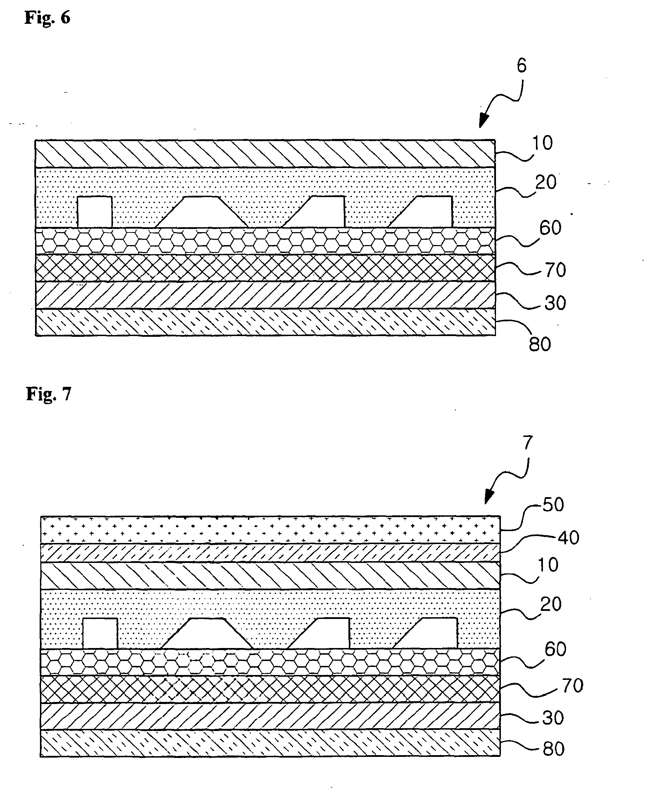

As shown in Fig. 6, the decoration sheet may also include a primer layer 80 that is formed on the lower side of the colored film 30. Here, the primer layer 80 may allow the decoration sheet to adhere to various adherends. The primer layer 80 may be formed using one of the general materials generally known in the art, which includes acrylic resins, acryl-urethane resins, epoxy resins, urethane resins, isocyanate resins, polyesters, ethylene-acetic acid vinyl copolymers, polyamides, melamine resins, synthetic rubbers or polyvinylalcohols.

The present invention also relates to a method of manufacturing a decoration sheet, which includes: applying a coating solution including a photo-curable or thermo-curable resin composition on one surface of a transparent layer including PETG, so as to produce a coating layer; curing the coating layer while the coating layer is kept in contact with a roll or mold having an embossed pattern; and forming a colored film on the cured coating layer.

In the present method, the coating solution prepared using a photo-curable or thermo-curable resin composition is applied to one surface of the transparent layer prepared using PETG. The transparent layer including PETG may be prepared by a general extruding, pressing or calendering process.

The method of applying the coating solution to the transparent layer is not particularly limited, and the coating solution may be applied using a bar coater.

In the present method, after the above process, an embossing roll or mold, on which an embossing pattern corresponding to the desired pattern is formed, is placed in contact with the coating layer, and the coating layer is cured. That is, while the roll or mold is kept in contact with the coating layer, the coating layer is cured to form an embossed pattern. Here, the material of the roll to be used and the embossed pattern are not particularly limited, and may be suitably selected as necessary.

The method of curing the coating layer is not particularly limited, and the coating solution may be cured by a common means according to the recipe of the used coating solution.

As the embossed pattern is formed by such a method, a fine and uniform embossed pattern can be formed without being deformed by heat applied in a subsequent process.

In the present invention, after the curing process, a colored film that is capable of providing or improving the appearance and mirror effect of the decoration sheet is laminated on the embossed pattern. The method of laminating the colored film is not particularly limited, and the colored film formed by an extruding or calendaring process, and the like may be laminated on the embossed pattern using thermal lamination or an adhesive.

In the present method, before forming the colored film, a process of forming a printed layer or metal deposition layer on the embossed pattern side, or adhering a film having the printed layer or metal deposition layer thereon to the embossed pattern side is additionally performed. Then, an adhesive is applied to the printed layer or metal deposition layer formed as such, and then the colored film may be laminated.

As necessary, additional processes of forming a protective layer or surface layer on a surface of the transparent layer at a suitable time, and forming a primer layer under the colored film may be performed.

Methods of forming the protective layer, surface layer, and primer layer are not particularly limited, and these layers may be formed using suitable means which are generally used in the art.

### Examples

Examples corresponding to the present invention and comparative examples, which do not correspond to the present invention, will be described in further detail, but these examples are not provided to limit the scope of the present invention.

### Example 1

A decoration sheet as shown in Fig. 7 was manufactured. In the structure shown in Fig. 7, a polyethylene film was used as a surface layer 50, and a protective layer 40 was formed to a thickness of about 4 µm using a conventional acrylic composition. As a transparent layer 10 having a mirror surface effect, a PETG film having a thickness of about 50 µm was used. An embossed pattern layer 20 was formed by applying an UV curable resin composition (urethane-base composition) to one surface of the PETG film so as to have a thickness of about 40 µm, and irradiating UV with the composition while the composition was kept in contact with a roll having an embossed pattern. A printed layer 60 was formed under the embossed pattern layer 20, and a polyvinyl chloride film, as a colored film 30, having a thickness of about 0.3 mm was laminated on the printed layer 60 using an adhesive 70. Then, a primer layer 80 having a thickness of about 2 µm was formed using a conventional acrylic resin, thereby completing the decoration sheet.

### Example 2

A decoration sheet was manufactured by the same method as described in Example 1, except that, during forming the embossed pattern layer 20, the UV curable composition (urethane base) was coated to a thickness of about 5 µm, and then cured while being kept in contact with the roll having the embossed pattern, a metal deposition layer was formed as the printed layer 60, and a polyvinyl chloride film having a thickness of about 0.4 mm was used as the colored film 30.

### Example 3

A decoration sheet was manufactured by the same method as described in Example 1, except that, during forming the embossed pattern layer 20, the UV curable composition (urethane base) was coated to a thickness of about 20 µm, and then cured while being kept in contact with the roll having the embossed pattern.

### Comparative example 1

A decoration sheet was manufactured by the same method as described in Example 1, except that a PET film having a thickness of about 30 µm was used as the transparent layer 10, and a polyvinyl chloride film having a thickness of about 0.1 mm was used as the colored film 30.

### Comparative example 2

A decoration sheet was manufactured by the same method as described in Example 1, except that the protective layer 40 was not formed, the embossed pattern layer 20 was formed on the upper side of the transparent layer 10, and the printed layer 60, the adhesive 70, the colored film (a polyvinyl chloride film having a thickness of 0.3 mm) 30 and the primer layer 80 were sequentially formed on the surface of the transparent layer 10 opposite to the surface on which the embossed pattern layer 20 was formed.

### Comparative example 3

A decoration sheet was manufactured by the same method as described in Example 1, except that an embossed pattern was formed by directly applying a roll having an embossed pattern on the transparent layer 10 (PETG having a thickness of about 0.4 mm) without using the photo-curable or thermo-curable resin composition, and a polyvinyl chloride film having a thickness of about 0.1 mm was used as the colored film.

### 1. Evaluation of Formability

Formability was evaluated by measuring flexibility when the decoration sheets manufactured in Examples and Comparative examples were processed and adhered on the basis of the following criteria.

### <Evaluation Criteria>

○: Effectively processed on and adhered to a curved adherend due to excellent flexibility

Δ: Ineffectively processed on and adhered to a curved adherend due to slightly low flexibility

X: Difficult to be processed on and adhered to a curved adherend due to very low flexibility

### 2. Evaluation of Surface Smoothness

Surface smoothness was evaluated by observing generation of folding or running on the surface of the decoration sheets manufactured in Examples and Comparative examples after processing and adhering the decoration sheets on the basis of the following criteria.

### <Evaluation Criteria>

○: No folding or running observed on the surface after adhering

Δ: Some folding or running observed on the surface after adhering

X: Much folding or running observed on the surface after adhering

### 3. Evaluation of Stain Resistance

Stains were applied to the surfaces of the decoration sheets manufactured in Examples and Comparative Examples, and then removed, followed by evaluating stain resistance on the basis of the following criteria.

### <Evaluation Criteria>

○: No stains remaining on the sheet surface

Δ: Some stains remaining on the sheet surface

X: Many stains remaining on the sheet surface

### 4. Evaluation of Three-Dimensional Effect

A three-dimensional effect was evaluated by observing the degrees of deformation of the embossed pattern layer with the naked eye after the decoration sheets manufactured in Examples and Comparative examples were processed and adhered on the basis of the following criteria.

### <Evaluation Criteria>

○: The embossed pattern was kept without being deformed.

Δ: A part of the embossed pattern was deformed, so that it was difficult to recognize the original pattern.

X: Most of the embossed pattern was deformed, so that it was impossible to recognize the original pattern.

The evaluation results are listed in Table 1 below.

**[Table 1]**

| | Formability | Surface Smoothness | Stain Resistance | Three-Dimensional Effect |
|---|---|---|---|---|
| Example 1 | ○ | ○ | ○ | ○ |
| Example 2 | ○ | ○ | ○ | ○ |
| Example 3 | ○ | ○ | ○ | ○ |
| Comparative example 1 | × | ○ | ○ | ○ |
| Comparative example 2 | ○ | ○ | × | ○ |
| Comparative example 3 | ○ | × | ○ | × |

As can be seen from Table 1, the decoration sheets according to the present invention have excellent formability, surface smoothness, stain resistance and three-dimensional effect.

However, in the case of Comparative example 1 in which the PET film was used as the transparent layer, it has poor elongation properties, and the decoration sheet has very low formability. Moreover, in the case of Comparative example 2 in which the embossed pattern is formed on the upper side of the transparent layer, it is difficult to remove stains, such that the stains still remain on the embossed pattern. Thus, the decoration sheet has very low stain resistance.

In the case of Comparative example 3, since the formed embossed pattern is easily deformed in a subsequent process, the three-dimensional effect is significantly reduced, and according to the deformation of the embossed pattern, the surface smoothness is also significantly reduced.

In the present invention, PETG film having excellent gloss and formability is used as a transparent layer having a mirror surface effect; a three-dimensional embossed pattern is formed using a photo-curable or thermo-curable resin composition on the lower side of the transparent layer, and then a colored film providing or improving the appearance and mirror surface effect is formed on the lower side of the embossed pattern.

Therefore, the present invention can provide a decoration sheet, which has the mirror surface effect on a surface and the three-dimensional pattern deeply formed therein. The present invention can also provide a decoration sheet having an embossed pattern layer with a fine and uniform three-dimensional pattern, which is not elongated or deformed due to heat generated during processing or in use. The present invention can also provide a decoration sheet, which has excellent formability and surface properties such as wear resistance and scratch resistance, and can be applied in thermal or membrane forming without limitations.

## Claims

1. A decoration sheet having a mirror surface and comprising:
a transparent layer (10) having a mirror surface and including glycol-modified polyethyleneterephthalate;
a protective layer (40) that is formed on the upper side of the transparent layer (10);
an embossed pattern layer (20) that is formed on the lower side of the transparent layer (10) and includes a cured product of a photo-curable resin composition or thermo-curable resin composition;
a colored film (30) that is formed on the lower side of the embossed pattern layer (20); and
a printed layer or metal deposition layer (60) that is formed between the embossed pattern layer (20) and the colored film (30) and is adhered to the colored film (30) using an opaque adhesive layer (70).

2. The decoration sheet according to claim 1, wherein the transparent layer (10) has a thickness of 0.02 mm to 0.5 mm.

3. The decoration sheet according to claim 1, wherein the photo-curable resin composition includes a photo-curable oligomer, a photoinitiator and a diluent monomer.

4. The decoration sheet according to claim 1, wherein the photo-curable resin composition has a solid content of 100 weight%.

5. The decoration sheet according to claim 1, wherein the thermo-curable resin composition includes acrylic resin, acrylic-urethane resin, epoxy resin, urethane resin, isocyanate resin, polyester resin, ethylene-acetic acid vinyl copolymer, polyamide, melamine resin, synthetic rubber or polyvinylalcohol.

6. The decoration sheet according to claim 1, wherein the embossed pattern layer (20) has a thickness of 2 µm to 50 µm.

7. The decoration sheet according to claim 1, wherein the colored film (30) is polyvinylchloride film or polyester film.

8. The decoration sheet according to claim 1, wherein the colored film (30) has a thickness of 0.05 mm to 0.5 mm.

9. The decoration sheet according to claim 1, further comprising a surface layer (50) that is formed on the upper side of the protective layer (40).

10. The decoration sheet according to claim 9, wherein the surface layer (50) is polyethylene film.

11. A method of manufacturing a decoration sheet having a mirror surface, comprising:
forming a protective layer (40) on one surface of a transparent layer (10) consisting of a glycol-modified polyethyleneterephthalate film and having a mirror surface;
applying a coating solution including a photo-curable resin composition or thermo-curable resin composition on the other surface of the glycol-modified polyethyleneterephthalate film;
curing the applied coating solution while the coating layer is being pressed with a roll or mold having an embossed pattern so as to form an embossed pattern layer (20);
forming a printed layer or metal deposition layer (60) on the embossed pattern layer (20); and
adhering a colored film (30) to the printed layer or metal deposition layer (60) using an opaque adhesive layer (70).

## Patentansprüche

1. Dekorfolie mit einer Spiegeloberfläche und umfassend:
eine transparente Schicht (10) mit einer Spiegeloberfläche und mit glycolmodifiziertem Polyethylenterephthalat,
eine Schutzschicht (40), die auf der oberen Seite der transparenten Schicht (10) gebildet ist,
eine Prägemusterschicht (20), die auf der unteren Seite der transparenten Schicht (10) gebildet ist und ein gehärtetes Produkt aus einer photohärtbaren Harzzusammensetzung oder thermohärtbaren Harzzusammensetzung enthält,
einen gefärbten Film (30), der auf der unteren Seite der Prägemusterschicht (20) gebildet ist, und
eine Druckschicht oder eine Metallniederschlagsschicht (60), die zwischen der Prägemusterschicht (20) und dem gefärbten Film (30) gebildet ist und an dem gefärbten Film (30) unter Verwendung einer opaken Adhäsivschicht (70) haftet.

2. Dekorfolie nach Anspruch 1, worin die transparente Schicht (10) eine Dicke von 0,02 bis 0,5 mm hat.

3. Dekorfolie nach Anspruch 1, worin die photohärtbare Harzzusammensetzung ein photohärtbares Oligomer, einen Photoinitiator und ein Verdünnungsmonomer enthält.

4. Dekorfolie nach Anspruch 1, worin die photohärtbare Harzzusammensetzung einen Feststoffgehalt von 100 Gew.-% hat.

5. Dekorfolie nach Anspruch 1, worin die thermohärtbare Harzzusammensetzung Acrylharz, Acryl-Urethanharz, Epoxyharz, Urethanharz, Isocyanatharz, Polyesterharz, Ethylen-Essigsäure-Vinyl-Copolymer, Polyamid, Melaminharz, synthetischen Kautschuk oder Polyvinylalkohol enthält.

6. Dekorfolie nach Anspruch 1, worin die Prägemusterschicht (20) eine Dicke von 2 bis 50 µm hat.

7. Dekorfolie nach Anspruch 1, worin der gefärbte Film (30) ein Polyvinylchloridfilm oder Polyesterfilm ist.

8. Dekorfolie nach Anspruch 1, worin der gefärbte Film (30) eine Dicke von 0,05 bis 0,5 mm hat.

9. Dekorfolie nach Anspruch 1, weiterhin umfassend eine Oberflächenschicht (50), die auf der oberen Seite der Schutzschicht (40) gebildet ist.

10. Dekorfolie nach Anspruch 9, worin die Oberflächenschicht (50) ein Polyethylenfilm ist.

11. Verfahren zur Herstellung einer Dekorfolie mit einer Spiegeloberfläche, umfassend:
Bildung einer Schutzschicht (40) auf einer Oberfläche einer transparenten Schicht (10), bestehend aus einem glycolmodifizierten Polyethylenterephthalatfilm und mit einer Spiegeloberfläche;
Auftragen einer Beschichtungslösung, umfassend eine photohärtbare Harzzusammensetzung oder thermohärtbare Harzzusammensetzung, auf die andere Oberfläche des glycolmodifizierten Polyethylenterephthalatfilmes,
Härten der aufgetragenen Beschichtungslösung, während die Beschichtungslösung mit einer Walze oder Form mit einem Prägemuster gepresst wird, zur Erzeugung einer Prägemusterschicht (20),
Bilden einer Druckschicht oder Metallniederschlagsschicht (60) auf der Prägemusterschicht (20) und
Anhaften eines gefärbten Filmes (30) mit der Druckschicht oder Metallniederschlagsschicht (60) unter Verwendung einer opaken Adhäsivschicht (70).

## Revendications

1. Feuille décorative ayant une surface de miroir et comprenant :
une couche transparente (10) ayant une surface de miroir et comprenant du polyéthylène-téréphtalate modifié par glycol ;
une couche protectrice (40) qui est formée sur le côté supérieur de la couche transparente (10) ;
une couche de motif gaufré (20) qui est formée sur le côté inférieur de la coup transparente (10) et comprend un produit durci d'une composition de résine photodurcissable ou d'une composition de résine thermodurcissable ;
un film coloré (30) qui est formé sur le côté inférieur de la couche de motif gaufré (20) ; et
une couche imprimée ou une couche de dépôt de métal (60) qui est formée entre la couche de motif gaufré (20) et le film coloré (30) et est collée au film coloré (30) en utilisant une couche d'adhésif opaque (70).

2. Feuille décorative selon la revendication 1, dans laquelle la couche transparente (10) a une épaisseur de 0,02 mm à 0,5 mm.

3. Feuille décorative selon la revendication 1, dans laquelle la composition de résine photodurcissable comprend un oligomère photodurcissable, un photo-initiateur et un monomère diluant.

4. Feuille décorative selon la revendication 1, dans laquelle la composition de résine photodurcissable a une teneur en matière solide de 100 % en poids.

5. Feuille décorative selon la revendication 1, dans laquelle la résine thermodurcissable comprend une résine acrylique, une résine acrylique-uréthane, une résine époxy, une résine uréthane, une résine isocyanate, une résine polyester, une résine éthylène-acide vinylacétique, un polyamide, une résine mélamine, un caoutchouc synthétique ou l'alcool polyvinylique.

6. Feuille décorative selon la revendication 1, dans laquelle la couche de motif gaufré (20) a une épaisseur de 2 µm à 50 µm.

7. Feuille décorative selon la revendication 1, dans laquelle le film coloré (30) est un film de polychlorure de vinyle ou un film de polyester.

8. Feuille décorative selon la revendication 1, dans laquelle le film coloré (30) à une épaisseur de 0,05 mm à 0,5 mm.

9. Feuille décorative selon la revendication 1, comprenant en outre une couche de surface (50) qui est formée sur le côté supérieur de la couche protectrice (40).

10. Feuille décorative selon la revendication 9, dans laquelle la coup de surface (50) est un film de polyéthylène.

11. Procédé de fabrication d'une feuille décorative ayant une surface de miroir, comprenant :
la formation d'une couche protectrice (40) sur une surface d'une couche transparente (10) constituée d'un film de polyéthylène-téréphtalate modifié par glycol et ayant une surface de miroir ;
l'application d'une solution de revêtement comprenant une composition de résine photodurcissable ou une composition de résine thermodurcissable sur l'autre surface du film de polyéthylène-téréphtalate modifié par glycol ;
le durcissement de la solution de revêtement appliquée tandis que la couche de revêtement est pressée avec un rouleau ou un moule ayant un motif gaufré de manière à former une couche de motif gaufré (20) ;
la formation d'une couche imprimée ou d'une couche de dépôt de métal (60) sur la couche de motif gaufré (20) ; et
l'adhésion d'un film coloré (30) à la couche imprimée ou la couche de dépôt de métal (60) au moyen d'une couche d'adhésif opaque (70).
